# EUROPÄISCHE PATENTSCHRIFT

(11) **EP 0 968 590 B1**
(45) Veröffentlichungstag und Bekanntmachung des Hinweises auf die Patenterteilung: **23.07.2003**
(21) Anmeldenummer: 98922584.2
(22) Anmeldetag: 11.03.1998
(51) Int. Cl.: H04L 12/46

(54) **KOMMUNIKATIONSSYSTEM ZUM VERMITTELN VON DATENPAKETEN MIT ZUGEORDNETEN ROUTING-INFORMATIONEN**
COMMUNICATIONS SYSTEM FOR TRANSMITTING DATA PACKETS BETWEEN AFFILIATED COMMUNICATION TERMINALS AND/OR COMMUNICATION TERMINALS OF AFFILIATED LOCAL NETWORKS
SYSTEME DE COMMUNICATION POUR TRANSMETTRE DES PAQUETS DE DONNEES ENTRE DES TERMINAUX DE COMMUNICATION RACCORDES ET/OU DES TERMINAUX DE COMMUNICATION DE RESEAUX LOCAUX RACCORDES

(30) Priorität: 20.03.1997 DE 19711720
(43) Veröffentlichungstag der Anmeldung: 05.01.2000
(73) Patentinhaber: SIEMENS AKTIENGESELLSCHAFT, 80333 München (DE)
(72) Erfinder: WEHREND, Klaus, D-82223 Eichenau (DE); BENNING, Gerhard, D-85716 Unterschleissheim (DE); FELLERER, Josef, D-80689 München (DE)
(86) Internationale Anmeldenummer: DE9800717
(87) Internationale Veröffentlichungsnummer: WO98043461

(56) Entgegenhaltungen:
- US-A- 5 208 811
- US-A- 5 351 237
- "NETWARE TO ISDN: THE FIRST LINKS" DATA COMMUNICATIONS, Bd. 22, Nr. 1, 1. Januar 1993, Seiten 117-118, XP000332680
- HEYNE M: "ISDN IM PRIVATEN NETZ DER STADTWERKE MUENSTER" NTZ NACHRICHTENTECHNISCHE ZEITSCHRIFT, Bd. 47, Nr. 9, September 1994, Seite 664/665 XP000468043

## Beschreibung

In derzeitigen Kommunikationssystemen sind durch darin angeordnete Primärmultiplex-Anschlußeinheiten - auch als S2-Anschlüsse bezeichnet - Verbindungsmöglichkeiten zu einem an das Kommunikationssystem herangeführten öffentlichen oder privaten Kommunikationsnetz geschaffen, wobei ein Kommunikationsnetz beispielsweise durch ein ISDN-orientiertes Kommunikationsnetz realisiert ist. Über einen S2-Anschluß kann über einen Router ein lokales Netz - z.B. ein mehrere Personalcomputer verbindendes Ethernet-LAN - mit dem ISDN-orientierten Kommunikationsnetz verbunden werden. Dazu ist der Router sowohl mit einer S2-Schnittstelle als auch mit einer standardmäßigen LAN-Schnittstelle ausgestattet, wobei die S2-Schnittstelle mit dem Ausgang der S2-Anschlußeinheit des Kommunikationssystems und die LAN-Schnittstelle des Routers mit dem lokalen Netzwerk verbunden ist.

Ein Router realisiert hinsichtlich seiner wesentlichen Funktion die Schicht 3 des OSI-Refernzmodells, wobei mit Hilfe eines Routers Netze physikalisch mit jeweils unterschiedlicher Topologie der Schichten 1 und 2 verbunden werden - beispielsweise Ethernet-LAN und ISDN-orientiertes Kommunikationsnetz. Um Datenpakete zwischen den an den Router angeschlossenen Netzen zu vermitteln, werden die in den Routinginformationen der Datenpakete enthaltenen Adressangaben - Ziel und Ursprung - durch eine im Router angeordnete Steuereinrichtung interpretiert, bewertet und anschließend die Datenpakete entsprechend konvertiert.

Die S2-Schnittstelle umfaßt 30 Nutzkanäle, die nur bei größeren lokalen Netzen nutzbar sind. Dies bedeutet, daß die S2-Schnittstelle nicht optimal ausgelastet bzw. benutzt wird, d.h. die Nutzkanäle sind physikalisch vergeben und für andere Kommunikationsendgeräte nicht nutzbar.

In US 5 208 811 ist beispielsweise ein Kommunikationsanordnung beschrieben, bei der mehrere in einem lokalen Kommunikationsnetz LAN angeordnete LAN-Kommunikationsendgeräte über eine separate Netzkopplungseinheit - LAN/ISDN inter-working unit - an ein ISDN-orientiertes Kommunikationsnetz mit darin angeordneten ISDN-Kommunikationsendgeräten angeschlossen ist. Bei einem von einem LAN-Kommunikationsendgerät initiierten Verbindungsaufbau zu einem ISDN-Kommunikationsendgerät wird von der Netzkopplungseinheit eine ISDN-Kanalnummer und eine einen ISDN-Kommunikationspfad - Data Link Connection Identifier, DLCI - repräsentierende DLCI-Information an das LAN-Kommunikationsendgerät übermittelt. Von diesem wird anschließend ein eine Kommunikationspfad-Information enthaltender LAN-Datenrahmen an die Netzkopplungseinheit übermittelt. Nach Empfang des LAN-Datenrahmens wird durch die Netzkopplungseinheit eine Formatkonvertierung durchgeführt, bei welcher der LAN-Datenrahmen in einen ISDN-Datenrahmen umgewandelt wird.

Desweiteren ist in US 5 351 237 eine Kommunikationsanordnung beschrieben, bei welcher eine Vielzahl lokaler Netze LAN's über eine Vielzahl von Netzkopplungseinheiten bzw. Routern an ein ISDN-orientiertes Kommunikationsnetz angeschlossen sind. Von den in der Kommunikationsanordnung angeordneten Routern ist einer als übergeordneter Router - Main-Router - und die restlichen Router als untergeordnete Router - Sub-Router - konfiguriert. Jeder Router weist ein Tabelle auf, in welcher Routerinformationen gespeichert sind. Bei einer von einem Sub-Router initiierten Aktualisierungsanfrage werden durch den Main-Router aktualisierte Routerinformationen in Form von Datenpaketen an die Sub-Router übermittelt, wobei durch jeden Sub-Router mit Hilfe der empfangenen Routerinformationen die in den Tabellen gespeicherten Routerinformationen aktualisiert werden.

Der Erfindung liegt die Aufgabe zugrunde, die Kopplung von Kommunikationssystemen, privater Nebenstellenanlagen, und lokalen Netzen zu verbessern. Die Aufgabe wird durch die Merkmale des Patentanspruchs 1 gelöst.

Der wesentliche Aspekt des erfindungsgemäßen Kommunikationssystems zum Vermitteln von Datenpaketen mit zugeordneten Routinginformationen zwischen Kommunikationsendgeräten des Kommunikationssystems und/oder Kommunikationsendgeräten in einem lokalen Netz besteht darin, daß im Kommunikationssystem zumindest eine als Teilnehmeranschlußeinheit ausgestaltete Netzkopplungseinheit angeordnet ist. Das Kommunikationssystem weist dabei ein mehrere bidirektionale, gemäß einem Zeitmultiplex-Übertragungsverfahren wirkende Anschlüsse aufweisendes Koppelfeldmodul und eine mit dem Koppelfeldmodul verbundene, zumindest einen Signalisierungsanschluß aufweisende Steuereinheit auf. Erfindungsgemäß weist die Netzkopplungseinheit zumindest eine LAN-Anschlußeinheit mit einer LAN-Schnittstelle zum Anschluß an ein erstes lokales Netz sowie zumindest eine einen bidirektionalen, gemäß einem Zeitmultiplex-Übertragungsverfahren wirkenden Ausgang realisierende Multiplexeinheit zum Anschluß an zumindest einen der bidirektionalen, Zeitmultiplex-orientierten Anschlüsse des Koppelfeldmoduls auf. Desweiteren sind in der Netzkopplungseinheit eine einen Signalisierungsausgang realisierende Signalisierungseinheit zum Anschluß an den zumindest einen Signalisierungsanschluß der Steuereinheit und eine mit der Multiplexeinheit und mit der Signalisierungseinheit und mit der LAN-Anschlußeinheit verbundene Umwandlungseinheit angeordnet. Die Umwandlungseinheit weist Mittel zum Bewerten der Routing-Information und Mittel zum Vermitteln der Datenpakete von und zum lokalen Netz bzw. von und zum Koppelfeldmodul in Abhängigkeit vom Bewertungsergebnis und Mittel zum Konvertieren von Signalisierungsinformationen gemäß einem ersten Übertragungsprotokoll in Signalisierungsinformationen gemäß zumindest einem weiteren Übertragungsprotokoll und Mittel zur Anpassung des Datenformats der zu vermittelnden Datenpakete gemäß dem ersten oder dem zumindest einem weiteren Übertragungsprotokoll auf.

Der wesentliche Vorteil des erfindungsgemäßen Kommunikationssystems besteht darin, daß durch die Ausgestaltung der Netzkopplungseinheit als eine in das Kommunikationssystem integrierbare Teilnehmeranschlußeinheit, die im Kommunikationssystem angeordneten zeitmultiplex-orientierten Anschlüsse des Koppelfeldmoduls über die Netzkopplungseinheit bzw. über die darin angeordnete Umwandlungseinheit direkt mit dem an das Kommunikationssystem angeschlossene lokale Netz verbunden sind. Dadurch können an das Kommunikationssystem bzw. an die Netzkopplungseinheit übermittelte und eine Routing-Information aufweisende Datenpakete zwischen den mit dem Kommunikationssystem verbundenen Netzen vermittelt werden. Durch die Anordnung von Router-Funktionen in der Netzkopplungseinheit, kann auf einen wirtschaftlich aufwendigen Anschluß eines externen Routers - beispielsweise eines ISDN-Routers oder Access-Servers - einschließlich der im Kommunikationssystem realisierten S2-Schnittstelle verzichtet werden und somit eine kostengünstige vermittlungstechnische Verbindung zwischen einem lokalen Netz - z.B. Ethernet-LAN - und dem Kommunikationsnetz - z.B. private Corporate Network oder öffentliches, ISDN- orientiertes Netz - geschaffen werden. Das lokale Netz kann beispielsweise als Kommunikationssystem-internes Administrations-Netz mit mehreren daran angeschlossenen Administrations- und Wartungs-Servern ausgestaltet sein. Eine im öffentlichen Kommunikationsnetz angeordnete, externe Administrations-Zentrale kann sich somit über das öffentliche Kommunikationsnetz in das Kommunikationssystem einwählen und über die erfindungsgemäße Netzkopplungseinheit Zugang zum gewünschten Kommunikationssystem-internen lokalen Netz bzw. zu den damit verbundenen Administrations- und Wartungs-Servern erhalten - "dial-in-Funktion". Durch die erfindungsgemäße Netzkopplungseinheit und der damit geschaffenen Möglichkeit der Fern-Administration eines Kommunikationssystems, wird die Administration und die Wartung eines Kommunikatiossystems, insbesondere großer Vermittlungsanlagen, wesentlich vereinfacht.

Vorteilhaft weist die Netzkopplungseinheit zumindest eine weitere mit der Umwandlungseinheit verbundene LAN-Anschlußeinheit mit einer weiteren LAN-Schnittstelle zum Anschluß an zumindest ein weiteres lokales Netz auf. Dazu sind in der Umwandlungseinheit weitere Mittel zum Vermitteln der Datenpakete von und zu und zwischen den lokalen Netzen bzw. von und zum Koppelfeldmodul und weitere Mittel zur Konvertierung von und in Signalisierungsinformationen gemäß einem zusätzlichen Übertragungsprotokoll oder Routinginformationen und weitere Mittel zur Anpassung des Datenformats der Datenpakete angeordnet - Anspruch 2. Durch die zusätzlich in der Netzkopplungseinheit angeordnete LAN-Anschlußeinheit kann ein weiteres lokales Netz - auch als Server/Customer LAN bezeichnet - an die Netzkopplungseinheit und somit an das Kommunikationssystem angeschlossen werden. Durch die in der Netzkopplungseinheit angeordneten Mittel - Router-Funktionen - wird zudem ein Datenaustausch zwischen den beiden angeschlossenen lokalen Netzen ermöglicht.

Bei untereinander verbundenen, ein Kommunikationsnetz bildenden weiteren Kommunikationssystemen weist die Umwandlungseinheit weitere Mittel zum Vermitteln der Datenpakete zwischen Kommunikationsendgeräten des Kommunikationssystems und einen der angeschlossenen lokalen Netze oder zwischen den weiteren Kommunikationssystemen des Kommunikationsnetzes und einem lokalen Netz und Mittel zur entsprechenden Konvertierung der Signalisierungsfunktionen und Mittel zur entsprechenden Anpassung des Datenformats der Datenpakete auf - Anspruch 3. Somit kann von einem im Kommunikationsnetz beispielsweise angeordneten Service-Server eine Verbindung zu einem mit dem Server/Customer-LAN eines Kommunikationssystems verbundenen Server hergestellt werden. Dieser kann beispielsweise als Phone-Mail-Server ausgestaltet sein.

Nach einer vorteilhaften Ausgestaltung des erfindungsgemäßen Kommunikationssystems weist die Netzkopplungseinheit Mittel zur eindeutigen LAN-Identifizierung einer LAN-Schnittstelle innerhalb eines lokalen Netzes und Mittel zur eindeutigen logischen Netz-Identifizierung der LAN-Schnittstellen und von Kommunikationsendgeräten der lokalen Netze, wobei die LAN-Schnittstellen und die Kommunikationsendgeräte einem übergeordneten Netz zugeordnet sind, und Mittel zur Kommunikationsnetz-Identifizierung der Netzkopplungseinheit innerhalb des Kommunikationsnetzes auf. - Anspruch 4. Die eindeutige LAN-Identifizierung einer LAN-Schnittstelle entspricht dabei einer in der Schicht 1 des OSI-Referenzmodells angesiedelten Adressierung und die logische Netz-Identifizierung einer in einer höheren Schicht - Schicht 3 - angesiedelten Adressierung. Sowohl die eindeutige LAN-Identifizierung als auch die logische Netz-Identifizierung einer LAN-Schnittstelle sind weltweit eindeutig gültig, d.h. die dadurch identifizierte LAN-Schnittstelle unter einer weltweit eindeutig gültigen Identifizierung bzw. Adresse ansprechbar, vorteilhaft unter der weit verbreiteten Internet-Protokoll- bzw. Internet-Adresse - Anspruch 7. Durch die genannten Mittel zur Identifizierung der LAN-Schnittstelle bzw. der Netzkopplungseinheit können die genannten Einheiten bzw. Schnittstellen mittels unterschiedlicher, standardisierter Netz-Zugriffsmechanismen bzw. Netzprotokollen angesprochen werden. Die Netzprotokolle können dabei auf unterschiedlichen Ebenen des OSI-Referenzmodells angeordnet sein, wodurch standardisierte und weit verbreitete Anwendungssoftware für den Datenaustausch zwischen den angeschlossenen Netzen einsetzbar ist.

Optional weist die Netzkopplungseinheit weitere Mittel zur zusätzlichen, lokalen, logischen Netz-Identifizierung einer LAN-Schnittstelle einschließlich des zugeordneten lokalen Netzes auf - Anspruch 5. Durch diese Mittel kann einer eine bereits - globale -, logische Netz-Identifizierung aufweisenden LAN-Schnittstelle eine zusätzliche lokale, logische Netz-Identifizierung zugeordnet werden, welche jedoch nur innerhalb des mit der LAN-Schnittstelle verbundenen lokalen Netzes gültig ist. Die Vergabe von lokalen, logischen Netz-Identifizierungen innerhalb eines lokalen Netzwerkes hat den Vorteil, daß keine weltweit gültigen Netz-Identifizierungen bzw. Internet-Protokoll-Adressen für beispielsweise Kommunikationssystem-interne Kommunikationsendgeräte vergeben werden müssen.

Nach einer vorteilhaften Ausgestaltung ist die eindeutige LAN-Identifizierung einer LAN-Schnittstelle durch eine schnittstellenbezogene, standardisierte LAN-Adresse und die logische Netz-Identifizierung einer LAN-Schnittstelle durch eine standardisierte Internet-Adresse und die Kommunikationsnetz-Identifizierung der Netzkopplungseinheit durch eine Kommunikationsnetz-Rufnummer realisiert - Anspruch 7. Die schnittstellenbezogene, standardisierte LAN-Adresse ist beispielsweise durch eine Hardware-Adresse bzw. MAC-Adresse -Medium-Access-Controll - einer LAN- bzw. Ethernet-Schnittstelle gebildet. Sie ist 6 Byte lang und wird weltweit eindeutig von IEEE vergeben. Jeder in der Netzkopplungseinheit angeordneten LAN-Schnittstelle wird eine MAC-Adresse zugeordnet. Sie werden vorteilhaft in einem PROM bei der Fertigung der Baugruppe abgespeichert und sind nicht konfigurierbar. Die standardisierte Internet-Protokoll-Adresse - global oder lokal - ist eine Adresse der Schicht 3 des OSI-Referenzmodells. Diese indentifiziert im allgemeinen sowohl die LAN-Schnittstelle als auch das mit der Schnittstelle verbundene lokale Netz. Für den Fall einer Bereitstellung eines globalen Internet-Zugangs durch das Kommunikationssystem muß die Internet-Adresse weltweit eindeutig sein. Zumindest muß die Internet-Adresse eindeutig in den Netzen sein, zu denen die in der Netzkopplungseinheit angeordneten LAN-Schnittstellen, bzw. die bidirektionalen, Zeitmultiplex-orientierten Ausgänge über das Kommunikationsnetz Zugang besitzen. Die Internet-Adressen sind frei konfigurierbar.

Für das Vermitteln der Datenpakete sind in der Netzkopplungseinheit Mittel zum Erkennen der Datenpaket-Köpfe und Mittel zum Selektieren der in den Datenpaket-Köpfen angeordneten Netz-Identifizierungen sowie Mittel zum Bewerten der Netz-Identifizierungen vorgesehen. Desweiteren weist die Netzkopplungseinheit Mittel zum Vermitteln der Datenpakete in Abhängigkeit vom Bewertungsergebnis entweder zu einem an die Netzkopplungseinheit angeschlossenen lokalen Netz oder an das Kommunikationsnetz auf - Anspruch 8. Durch diese vorteilhafte Realisierung von Routing-Funktionen in der Netzkopplungseinheit werden die in den Köpfen der Datenpakete enthaltenen Ziel-Adressen selektiert und bewertet und anschließend an das entsprechende Ziel vermittelt.

Bei Erkennen von über das Kommunikationsnetz zu vermittelnden Datenpaketen sind in der Netzkopplungseinheit zusätzliche Mittel zum Konvertieren der logischen Netz-Identifizierung in eine Kommunikationsnetz-Identifizierung vorgesehen, wobei die Kommunikationsnetz-Identifizierung in Abhängigkeit von der logischen Netz-Identifizierung gebildet wird. Desweiteren sind Mittel zum Verbindungsaufbau über das Kommunikationsnetz mit der Kommunikationsnetz-Identifizierung und Mittel zum Weiterleiten der Datenpakete über die aufgebaute Verbindung vorgesehen - Anspruch 9. Durch diese vorteilhafte Ausgestaltung können Verbindungen zu anderen im Kommunikationsnetz angeordneten Kommunikationssystemen bzw. den darin angeordneten Netzkopplungseinheiten aufgebaut werden, wobei die Verbindung über das Kommunikationsnetz in Abhängigkeit von den in den Datenpaketen enthaltenen logischen Netz-Identifizierungen hergestellt wird. Dazu wird aus der logischen Netz-Identifizierung eine entsprechende Kommunikationsnetz-Identifzierung abgeleitet, bzw. die logische Netz-Identifizierung in die entsprechende Kommunikationsnetz-Identifizierung konvertiert.

Für die Konvertierung sind vorteilhaft in der Netzkopplungseinheit Speichermittel zur Speicherung von weiteren, logischen Netz-Identifizierungen weiterer im Kommunikationsnetz angeordneter, lokaler Netze bzw. weiterer LAN-Schnittstellen und Speichermittel zur Zuordnung von jeweils eine weitere Netzkopplungseinheit repräsentierenden Kommunikationsnetz-Identifizierungen zu den gespeicherten, weiteren logischen Netz-Identifizierungen der weiteren Netze vorgesehen - Anspruch 10. Durch diese vorteilhafte Ausgestaltung werden die aus den Datenpaket-Köpfen selektierten logischen Netz-Identifizierungen mit den gespeicherten weiteren, logischen Netz-Identifizierungen der weiteren externen, bzw. im Kommunikationsnetz angeordneten lokalen Netze bzw. LAN-Schnittstellen verglichen und bei Erkennen einer gespeicherten logischen Netz-Identifizierung mit einer zugeordneten Kommunikationsnetz-Identifzierung die entsprechende Verbindung anhand der Kommunikationsnetz-Identifizierung über das Kommunikationsnetz aufgebaut und die Datenpakete an das Ziel vermittelt.

Bei Erkennen von an ein an die Netzkopplungseinheit angeschlossenen lokales Netz zu vermittelnden Datenpaketen, sind Mittel zum Erkennen von speziellen Netz-Identifizierungen und Mittel zum Konvertieren der erkannten Netz-Identifizierungen in zusätzliche, lokale, logische Netz-Identifizierungen sowie Mittel zum Einfügen der zusätzlichen, lokalen, logischen Netz-Identifizierungen in die Datenpakete und Mittel zum Anpassen und Weiterleiten der Datenpakete vorgesehen - Anspruch 11. Durch diese vorteilhafte Ausgestaltung werden bei an ein - kommunikationssystem-internes - lokales Netz mit einer zugeordneten lokalen Netz-Identifizierung zu vermittelnde Datenpaketen die logischen Netz-Identifizierungen in die entsprechenden lokalen, logischen Netz-Identifizierungen umgewandelt und die entsprechend angepaßten Datenpakete innerhalb des kommunikationssystem-internen Netzes vermittelt..

Weitere vorteilhafte Ausgestaltungen des erfindungsgemäßen Verfahrens sind den weiteren Ansprüchen zu entnehmen.

Im folgenden wird ein Ausführungsbeispiel des erfindungsgemäßen Kommunikationssystems anhand zweier Zeichnungen näher erläutert.

Dabei zeigen:
- FIG 1: in einem Blockschaltbild das erfindungsgemäße Kommunikationssystem mit einer darin angeordneten Netzkopplungseinheit und
- FIG 2: in einem Blockschaltbild eine Anordnung von zwei in einem Kommunikationsnetz angeordneten Kommunikationssystemen gemäß FIG 1.

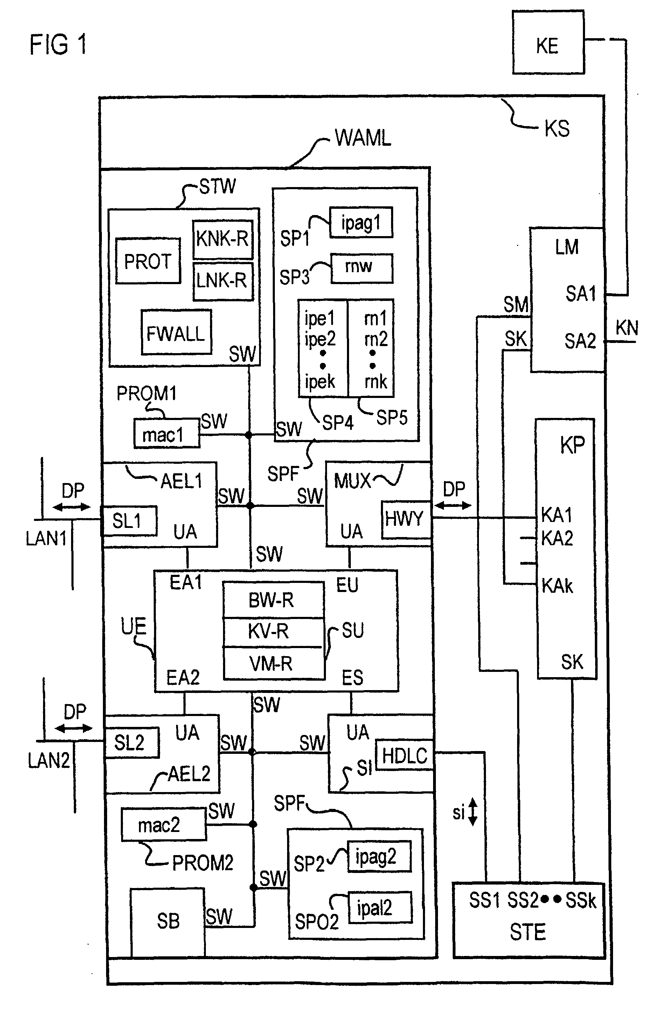

FIG 1 zeigt in einem Blockschaltbild das erfindungsgemäße Kommunikationssystem KS mit einer in diesem angeordneten, als Teilnehmeranschlußeinheit ausgestaltete Netzkopplungseinheit WAML. Das Kommunikationssystem KS weist weitere Anschlußeinheiten - beispielhaft ist eine Anschlußeinheit LM dargestellt - zum Anschluß von Kommunikationsendgeräten an das Kommunikationssystem KS auf. Desweiteren ist im Kommunikationssystem KS ein mehrere bidirektionale, Zeitmultiplex-orientierte Anschlüsse (KA1...k) aufweisendes Koppelfeldmodul KP angeordnet, wobei die Zeitmultiplex-ortientierten Ausgänge (KA1...k) als PCM- (Puls-Code-Modulation) Ausgänge - auch als PCM-Highways oder Speech-Highways bezeichnet - ausgestaltet sind. Jeder PCM-Highway umfaßt 30 Nutzkanäle, welche als ISDN-orientierte B-Kanäle mit einer Übertragungsrate von 64 kbit/s ausgestaltet sind. Desweiteren ist im Kommunikationssystem KS eine mehrere Steueranschlüsse SS1...k aufweisende Steuereinheit STE angeordnet. Über einen Steueranschluß SSk ist die Steuereinheit STE mit einem Steuereingang SK des Koppelfeldmoduls KP verbunden. Über die weiteren Steueranschlüsse SS1,2 ist die Steuereinheit STE zum einen mit einem in der Netzkopplungseinheit WAML angeordneten, durch eine Signalisierungseinheit SI realisierten Signalisierungsausgang HDLC und zum anderen mit Anschlußeinheiten LM verbunden. An einen ersten Anschluß SA1 der Anschlußeinheit LM ist beispielsweise ein Kommunikationsendgerät KE und an einen zweiten bidirektionalen, Zeitmultiplex-orientierten Anschluß SA2 ein öffentliches, ISDN-orientiertes Kommunikationsnetz KN angeschlossen. Über einen weiteren bidirektionalen, Zeitmultiplex-orientierten Anschluß SK ist die Aanschlußeinheit LM mit einem PCM-Ausgang KAk des Koppelfeldmoduls KP verbunden.

In der Netzkopplungseinheit WAML ist ebenfalls eine einen bidirektionalen, Zeitmultiplex-orientierten Ausgang HWY realisierende Multiplexeinheit MUX angeordnet. Der Ausgang HWY ist ebenfalls als PCM-Ausgang bzw. PCM-Highway ausgestaltet und mit einem PCM-Ausgang KA1 des Koppelfeldmoduls KP verbunden. Die Netzkopplungseinheit WAML weist eine erste LAN-Anschlußeinheit AEL1 mit einer darin angeordneten ersten LAN-Schnittstelle SL1 auf, wobei die erste LAN-Schnittstelle SL1 mit einem ersten lokalen Netz LAN1 verbunden ist. Das erste lokale Netz LAN1 ist in diesem Ausführungsbeispiel als Kommunikationssystem-externes Ethernet-LAN - auch als Server/Customer-LAN bezeichnet - ausgestaltet, in welchem beispielsweise ein Phone Mail-Server angeordnet ist. Desweiteren ist in der Netzkopplungseinheit WAML eine zweite, eine zweite LAN-Schnittstelle SL2 realisierende LAN-Anschlußeinheit AEL2 angeordnet. Die zweite LAN-Schnittstelle SL2 ist mit einem zweiten, Kommunikationssystem-internen lokalen Netz LAN2 verbunden. An das zweite Kommunikationssystem-interne Netzwerk LAN2 sind die für die Administration und die Wartung des Kommunikationssystems KS vorgesehenen Rechner bzw. Server angeschlossen. Alle genannten, eine Netzschnittstelle repräsentierenden Einheiten AEL1, AEL2, MUX, SI sind jeweils über einen Anschluß UA mit einem Anschluß EA1, EA2, EU, ES einer in der Netzkopplungseinheit WAML angeordneten Umwandlungseinheit UE verbunden.

Die Umwandlungseinheit UE weist eine Steuereinheit SU auf. Mit Hilfe der Steuereinheit SU werden an die Teilnehmeranschlußeinheit WAML bzw. an eine Anschlußeinheit AEL1, AEL2, oder Multiplexeinheit MUX oder Signalisierungseinheit SI - im folgenden auch als Port bezeichnet - übermittelte Datenpakete DP zwischen den mit den Ports verbundenen Netzen LAN1, LAN2 bzw. mit den an die Netzkopplungseinheit WAML herangeführten B-Kanälen des öffentlichen ISDN-orientierten Kommunikationsnetzes KN vermittelt. Dazu sind in der Steuereinheit SU der Umwandlungseinheit UE geeignete Mittel BW-R zum Bewerten der in den Datenpaketen DP enthaltenen Routinginformationen - d.h. Ziel- und Ursprungsdaten - sowie Mittel VM-R zum Vermitteln der Datenpakete von und zu den lokalen Netzen LAN1, LAN2 bzw. von und zum ISDN-orientierten Kommunikationsnetz KN in Abhängigkeit vom Bewertungsergebnis angeordnet. Desweiteren werden durch die Steuereinheit SU Signalisierungsinformationen si protokollgerecht konvertiert. So werden bei an ein lokales Netz LAN1, LAN2 zu vermittelnden Datenpaketen DP die an der Signalisierungseinheit SI eingehenden Signalisierungssignale si in entsprechende Routing-Informationen umgewandelt und die an der Multiplexeinheit MUX eingehenden Nutzdaten zusammen mit den gebildeten Routing-Informationen in formatgerechte, d.h. an das Ethernet-LAN-Format angepaßte Datenpakete umgewandelt und an die entsprechende Anschlußeinrichtung AEL1, AEL2 vermittelt.

Für den Austausch von Datenpaketen DP zwischen den an die Netzkopplungseinheit WAML angeschlossenen lokalen Netzen LAN1, LAN2, und dem Kommunikationsnetz KN ist jeder LAN-Anschlußeinheit AEL1, AEL2 bzw. der durch diese realisierten LAN-Schnittstelle SL1, SL2 eine eindeutige, d.h. weltweit gültige Identifizierung bzw. Adresse zugeordnet. Da die den Datenaustausch realisierenden Anwendungen - z.B. ein Datenaustausch-Protokoll realisierende Softwaremodule - auf verschiedenen Ebenen des OSI-Referenzmodells angesiedelt sind, sind einer LAN-Anschlußeinheit AEL1, AEL2 mehrere, auf unterschiedlichen Ebenen des OSI-Referenzmodells gültige Identifizierungen bzw. Adressen zugewiesen. So ist jeder LAN-Anschlußeinheit AEL1, AEL2 eine eindeutige, baugruppenspezifische LAN-Identifizierung mac1, mac2 zugeordnet. Die baugruppenspezifische LAN-Identifizierung mac1, mac2 realisiert eine auf der Schicht 1 des OSI-Referenzmodells angesiedelte Hardware-Adresse einer Ethernet-LAN-Schnittstelle SL1, SL2 und ist jeweils in einem in der Netzkopplungseinheit WAML angeordneten nichtflüchtigen Speicher PROM1, PROM2 gespeichert.

Desweiteren ist jeder LAN-Anschlußeinheit AEL1, AEL2 eine eindeutige bzw. globale, logische Netz-Identifizierung ipag1,2 bzw. Netz-Adresse zugeordnet. Diese ist 4 Byte lang und repräsentiert eine Adresse der Schicht 3 des OSI-Referenzmodells - beispielsweise eine Internet-Protokoll-Adresse. Die logische Netz-Identifizierung ipag1, ipag2 bzw. Internet-Protokoll-Adresse identifiziert sowohl die entsprechende LAN-Anschlußeinheit AEL1, AEL2 als auch das mit der LAN-Anschlußeinheit AEL1, AEL2 verbundene lokale Netz LAN1, LAN2 - bzw. Server/Customer-LAN oder Kommunikationssystem-interne lokale Netz. Die logische Netz-Identifizierung ipag1, ipag2 ist jeweils in einem Speicherbereich SP1, SP2 eines in der Netzkopplungseinheit WAML angeordneten flüchtigen Speichers SPF gespeichert. In diesem Ausführungsbeispiel ist für beide über eine LAN-Anschlußeinheit AEL1, AEL2 mit der Netzkopplungseinheit WAML verbundene lokale Netze LAN1, LAN2 ein globaler Internet-Zugang über das ebenfalls mit der Netzkopplungseinheit WAML verbundene öffentliche Kommunikationsnetz KN realisiert, d.h. die den LAN-Anschlußeinheiten AEL1, AEL2 zugeordneten logischen Netz-Identifizierungen ipag1, ipag2 sind derart definiert, daß sie weltweit eindeutig sind.

Desweiteren ist der zweiten LAN-Anschlußeinheit AEL2, eine weitere lokale, logische Netz-Identifizierung ipal2 zugeordnet. Diese ist in einem weiteren Speicherbereich SPO2 des in der Netzkopplungseinheit WAML angeordneten flüchtigen Speichers SPF gespeichert. Diese lokale, logische Netz-Identifizierung ipal2 ist nur innerhalb des zweiten, Kommunikationssystem-internen, lokalen Netzes LAN2 gültig. Alle mit dem Kommunikationssystem-internen lokalen Netz LAN2 verbundenen Administrations- und Wartungs-Server weisen ebenfalls eine lokale, logische Netz-Identifizierung auf. Da nach sicherheitstechnischen Aspekten das Kommunikationssystem-interne, lokale Netz LAN2 vom öffentlichen Kommunikationsnetz KN bzw. Internet entkoppelt ist, ist eine nur lokal gültige bzw. lokale, logische Netz-Identifizierung innerhalb des Kommunikationssystem-internen, lokalen Netzes LAN2 vorteilhaft. Hierbei können alle mit dem Kommunikationssystem ausgelieferten Administrations- und Wartungs-Server jeweils die gleiche lokale, logische Adressierung aufweisen, d.h. die Adressierung muß keine weltweit eindeutige Internet-Protokoll-Adresse repräsentieren. Um jedoch das Kommunikationssystem-Leistungsmerkmal "Fernwartung" zu ermöglichen, muß das Kommunikationssystem-interne lokale Netz LAN1 über die Netzkopplungseinheit WAML bzw. über die dort angeordnete LAN-Anschlußeinheit AEL2 im Kommunikationsnetz KN adressierbar sein. Die Adressierung geschieht mit der im Speicherbereich SP2 gespeicherten und der zweiten LAN-Anschlußeinheit AEL2 zugeordneten logischen Netz-Identifizierung ipag2. Um den Zugriff auf die im Kommunikationssystem-internen lokalen Netz LAN2 angeordneten Server über das öffentliche Kommunikationsnetz KN sowie den Zugriff vom Kommunikationssystem-internen lokalen Netz LAN2 auf das öffentliche Kommunikationsnetz KN zu ermöglichen, werden durch die in der Steuereinheit SU der Umwandlungseinheit UE angeordneten Mittel die eine Ziel- und Ursprungs-Identifizierung enthaltenen Routing-Informationen der an die Netzkopplungseinheit WAML übermittelten Datenpakete DP entsprechend umgewandelt.

Dazu werden durch eine in der Steuereinheit SU angeordnete Bewertungsroutine BW-R die Köpfe der Datenpakte DP erkannt und aus den in den Datenpaket-Köpfen enthaltenen Routing-Informationen die jeweils ein Ziel und einen Ursprung repräsentierenden logischen Netz-Identifizierungen ipag1,2,ipal2 selektiert und bewertet. Bei Erkennen einer das Kommunikationssystem-interne lokale Netz LAN2 als Ziel adressierenden, logischen Netz-Identifizierung ipag2 wird durch eine in der Steuereinheit SU angeordnete Konvertierungsroutine KV-R die logische Netz-Identifizierung ipag2 in die der zweiten LAN-Anschlußeinheit AEL2 zugeordnete, lokale, logische Netz-Identifizierung ipal2 umgewandelt. Ebenso werden bei vom Kommunikationssystem-internen lokalen Netz LAN2 an die zweite LAN-Anschlußeinheit AEL2 übermittelten Datenpaketen DP, d.h. bei Erkennen einer das Kommunikationssystem-interne, lokale Netz LAN2 als Ursprung adressierenden lokalen, logischen Netz-Identifizierung ipal2 diese durch die Konvertierungs-Routine KV-R in die entsprechende logische Netz-Identifizierung ipag2 umgewandelt. Nach der Umwandlung der logischen Netz-Identifizierung ipag2, ipal2 werden die ebenfalls in den Datenpaketen DP enthaltenen, redundanten Fehlerkorrektur-Informationen durch die Konvertierungs-Routine KV-R neu berechnet und entsprechend in die Datenpakete DP eingefügt. Die so konvertierten und angepaßten Datenpakete DP werden anschließend durch eine in der Steuereinheit SU angeordnete Vermittlungs-Routine VM-R gemäß den aktuellen Routing-Informationen weitervermittelt.

In der Netzkopplungseinheit WAML ist eine Steuereinheit STW angeordnet, welche eine Protokolleinheit PROT und eine Filtereinheit FWALL aufweist. Die Steuereinheit STW ist über Steuereingänge SW mit den in der Netzkopplungseinheit WAML angeordneten Einheiten AEL1,2,MUX,UE und den Speichern SPF,PROM1,2 verbundenen. Durch die Protokolleinheit PROT wird die Vermittlung bzw. der Transport der zwischen den Netzen LAN1, LAN2, KN auszutauschenden Datenpakete DP realisiert und abgesichert. In der Protokolleinheit PROT sind zum einen die Internet-spezifischen Protokolle TCP/IP - Transmission Control Protokoll / Internet Protokoll - als auch das für den Transport von TCP/IP-Datenpaketen über eine Punkt-zu-Punkt-Verbindung konzipierte PPP-Protokoll - Point-to-Point-Protokoll - realisiert.

Durch die Filtereinheit FWALL wird eine sicherheitstechnische Entkopplung der an die Netzkopplungseinheit WAML angeschlossenen Netze LAN1, LAN2, KN erreicht. Durch die in der Filtereinheit FWALL realisierten Filterfunktion wird sowohl ein Datenzugriff vom ersten lokalen Netz LAN1 - Server/Customer-LAN - auf das zweite Kommunikationssystem-interne lokale Netz LAN2 als auch ein Datenzugriff über das ISDN-orientierte Kommunikationsnetz KN auf die beiden lokalen Netze LAN1, LAN2 auf Berechtigung überprüft und gesteuert. Für die Realisierung der Filterfunktionen werden sowohl die in den Routing-Informationen der zu vermittelnden Datenpakete DP enthaltenen Ursprungs- als auch Ziel-Adressen auf Zulässigkeit überprüft - auch als Source- und Destination-Prüfung bezeichnet. Bei der Überprüfung der Ursprungs-Adresse wird bei einem über das öffentliche Kommunikationsnetz KN eingeleiteten Verbindungsaufbau die Rufnummer des rufenden Kommunikationsendgerätes - Teilnehmer-Authentisierung - anhand einer Liste mit vorgegebenen, berechtigten Rufnummern - nicht dargestellt - überprüft und somit unzulässige Verbindungen über das öffentliche Kommunikationsnetz KN verhindert. Desweiteren werden die logische Netz-Identifizierung und/oder die Ethernet-LAN-Adresse von an einer LAN-Anschlußeinheit AEL1, AEL2, eingehenden Datenpaketen DP überprüft. Ist die Ursprung-Adresse für den Austausch von Daten über die Netzkopplungseinheit WAML berechtigt, wird die in der Routing-Information enthaltene Ziel-Adresse nach den genannten Kriterien überprüft.

Nach einem erfolgreichen Durchlaufen der Datenpakete DP durch die Filterfunktionen, d.h. nach Feststellung der Berechtigung des Datenaustausches zwischen den in den Routing-Informationen angegebenen Ursprungs- und Zieladressen, werden durch die in der Netzkopplungseinheit WAML bzw. in der Umwandlungseinheit UE und Protokolleinheit PROT realisierten Routing-Funktionen die in den Datenpaketen DP enthaltenen Ziel-Adressen bzw. logischen Netz-Identifizierungen ipag1,2,ipal2 bewertet und gegebenenfalls konvertiert. Wird durch eine logische Netz-Identifizierung ein an die Netzkopplungseinheit WAML angeschlossenes lokales Netz LAN1, LAN2 ermittelt, werden die Datenpakete DP in genannter Art und Weise über die Umwandlungseinheit UE entsprechend vermittelt.

Weiterhin sind in einem in der Netzkopplungseinheit WAML angeordneten, vierten Speicherbereich SP4 des flüchtigen Speichers SPF logische Ziel-Netz-Identifizierungen ipe1...k all derjenigen im Kommunikationsnetz KN angeordneten weiteren Kommunikationssysteme bzw. der dort angeschlossenen lokalen Netze - nicht dargestellt - abgespeichert, die zu einem Datenaustausch mit einem an einem der beiden lokalen Netze LAN1, LAN2 angeschlossenen Kommunikationsendgerät - nicht dargestellt - vorgesehen sind. Dazu sind in einem den vierten Speicherbereich SP4 zugeordneten fünften Speicherbereich SP5 des flüchtigen Speichers SPF jeweils eine ISDN-orientierte Rufnummer repräsentierende Kommunikationsnetz-Identifizierungen rn1...k von entsprechenden in den weiteren Kommunikationssystemen angeordneten Netzkopplungseinheiten - nicht dargestellt - gespeichert. Jeder im vierten Speicherbereich SP4 abgespeicherten logischen Ziel-Identifizierung ipe1...k ist zumindest eine ISDN-orientierte Rufnummer rn1...k zugeordnet. Durch die in der Netzkopplungseinheit WAML realisierten Router-Funktionen wird bei ein im öffentlichen Kommunikationsnetz KN angeordnetes Kommunikationssystem als Ziel identifizierenden Datenpaketen DP die entsprechende, im vierten Speicherbereich SP4 abgespeicherte logische Netz-Identifizierung ipe1...k ermittelt und anhand der zugeordneten, im fünften Speicherbereich SP5 abgespeicherten Rufnummer rn1...k eine entsprechende B-Kanal-Verbindung über das öffentliche ISDN-orientierte Kommunikationsnetz KN aufgebaut.

Damit weitere im Kommunikationsnetz KN angeordnete Kommunikationssysteme eine entsprechende B-Kanal-Verbindung zum Kommunikationssystem KS bzw. zur Netzkopplungseinheit WAML zur Übertragung von Datenpaketen DP aufbauen können, ist der Netzkopplungseinheit WAML eine eindeutige Kommunikationsnetz-Identifizierung rnw zugeordnet, welche in einem dritten Speicherbereich SP3 des flüchtigen Speichers SPF gespeichert ist.

In der Netzkopplungseinheit WAML ist desweiteren eine zumindest eine serielle und/oder parallele Schnittstelle realisierende Schnittstelleneinheit SB vorgesehen. Über die Schnittstelleneinheit SB kann beispielsweise mittels einer V.24-Verbindung ein Personalcomputer - nicht dargestellt - an die Netzkopplungseinheit WAML angeschlossen werden. Mit Hilfe des Personalcomputers können beispielsweise die in den in der Netzkopplungseinheit WAML angeordneten Einheiten UE, STE, SPF ablaufenden, programmspezifischen Zustände überwacht werden - z.B. Trace und Debugging.

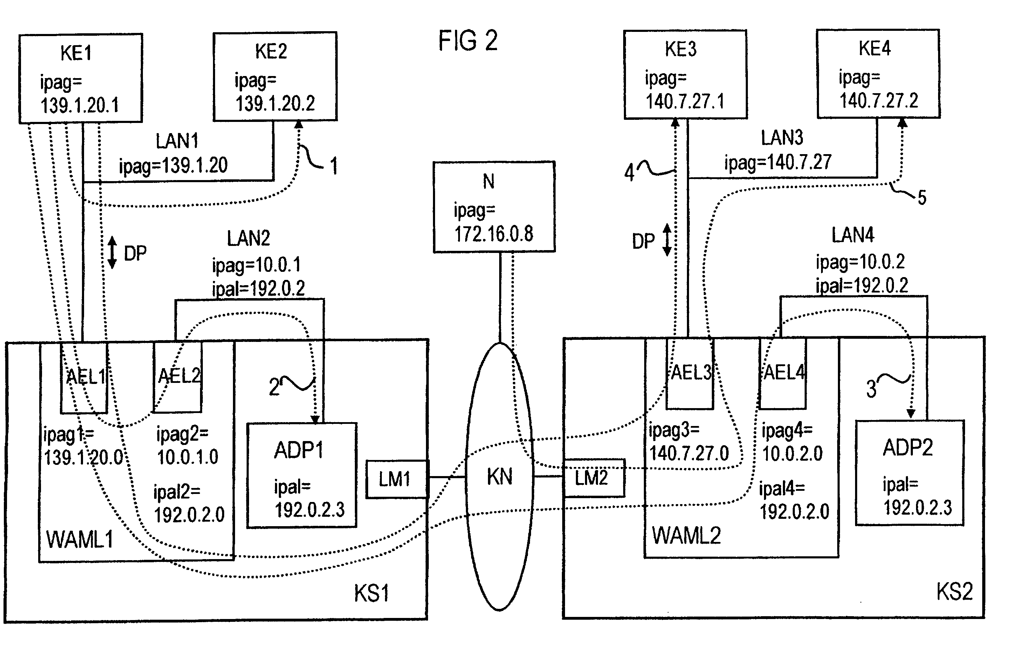

Anhand des in FIG 2 dargestellten Blockschaltbildes soll der Austausch von Datenpaketen DP zwischen an eine Netzkopplungseinheit WAML1,2 angeschlossenen lokalen Netzen LAN1...4 bzw. einem öffentlichen Kommunikationsnetz KN und insbesondere die protokollgerechte Konvertierung und formatgerechte Umwandlung der zu vermittelten Datenpakete DP näher erläutert werden. Das Blockschaltbild zeigt in einer schematischen Darstellung zwei in einem öffentlichen, ISDN-orientierten Kommunikationsnetz KN angeordnete, nach FIG 1 ausgestaltete Kommunikationssysteme KS1, KS2. Jedes Kommunikationssystem KS1, KS2 bzw. das darin angeordnete Koppelfeldmodul ist über eine Anschlußeinheit LM1,2 an das Kommunikationsnetz KN angeschlossen. In jedem Kommunikationssystem KS1,2 ist eine Netzkopplungseinheit WAML1,2 nach FIG 1 angeordnet. Die im ersten Kommunikationssystem KS1 angeordnete Netzkopplungseinheit WAML1 weist zwei jeweils eine LAN-Schnittstelle realisierende LAN-Anschlußeinheiten AEL1, AEL2 auf. Der ersten LAN-Anschlußeinheit AEL1 ist eine vier Byte lange, logische Netz-Identifizierung ipag1 139.1.20.0 zugeordnet. Im folgenden werden nur logische Netz-Identifizierungen ipag, ipal bzw. die den einzelnen Einheiten oder lokalen Netzen zugeordneten Internet-Protokoll-Adressen betrachtet, d.h. es wird der in den Schichten 3 und 4 des OSI-Referenzmodells realisierte Transport bzw. der durch die darin angeordneten TCP/IP-Transport-Protokolle gesteuerte Austausch von Datenpaketen DP näher erläutert.

Wie in FIG 1 erläutert, ist an die erste LAN-Anschlußeinheit AEL1 ein erstes lokales Netz LAN1 angeschlossen, über das zwei Kommunikationsendgeräte KE1, KE2 mit der Netzkopplungseinheit WAML1 bzw. mit dem Kommunikationssystem KS1 verbunden sind. Beim Ausführungsbeispiel sind die standardisierten Internet-Protokoll-Adressen gemäß der Version 4 strukturiert, d.h. umfassen 4 Byte. Hierbei sind durch die die ersten 3 Bytes umfassenden Addressierungs-Informationen lokale Netze eindeutig identifizierbar und durch die das letzte Byte umfassende Adressierungs-Information die Kommunikationsendgeräte in dem jeweiligen lokalen Netz identifizierbar - im Standard als Klasse C-Netz bezeichnet. Durch die Zuordnung der Internet-Protokoll-Adresse ipag1=139.1.20.0 zu der ersten LAN-Scnittstelle AEL1 ist sowohl die erste LAN-Schnittstelle AEL1 als auch das damit verbundene lokale Netz LAN1 durch die ersten drei Bytes ipag=139.1.20 identifiziert. Die beiden im lokalen Netz LAN1 angeordneten Kommunikationsendgeräte KE1, KE2 weisen entsprechend die Internet-Protokoll-Adressen ipag=139.1.20.1 und ipag=139.1.20.2 auf. An die zweite in der Netzkopplungseinheit WAML1 angeordnete LAN-Schnittstelle AEL2 ist ein kommunikationssystem-internes lokales Netz LAN2 angeschlossen. Über das kommunikationssystem-interne lokale Netz LAN2 ist eine im Kommunikationssystem KS1 angeordnete Administrationseinheit ADP1 mit der Netzkopplungseinheit WAML1 verbunden. Die Administrationseinheit ADP1 dient zur Administration und Wartung des Kommunikationssystems KS1. An das kommunikationssystem-interne lokale Netz LAN2 können beispielsweise weitere zentrale, Kommunikationssystem-spezifische Einheiten wie z.B. "Phone mail" oder "Gebührenverrechnungseinheit" angeschlossen sein - nicht dargestellt -. Um einen größtmöglichen Schutz von in der Administrationseinheit ADP1 abgespeicherten Daten bzw. dort realisierten Funktionen zu gewährleisten, ist das kommunikationssystem-interne Netz LAN2 von den anderen an die Netzkopplungseinheit WAML1 angeschlossenen Netzen LAN1, KN entkoppelt. Der Administrationseinheit ADP1 ist eine nur innerhalb des kommunikationssystem-internen lokalen Netzes LAN2 gültige lokale Internet-Protokoll-Adresse ipal=192.0.2.3 zugeordnet. Diese lokale Internet-Protokoll-Adresse ipal ist in allen Kommunikationssystemen der gleichen Art KS1, KS2 für die jeweiligen Administrationseinheiten ADP1, ADP2 gleich, wodurch vorteilhaft die in den Kommunikationssystemen KS1, KS2 realisierten Anwendungen - beispielsweise gleiche Softwaremodule - nicht an unterschiedliche Internet-Protokoll-Adressen angepaßt werden müssen. Der zweiten in der ersten Netzkopplungseinheit WAML1 angeordneten LAN-Schnittstelle AEL2 ist sowohl eine Internet-Protokoll-Adresse ipag2=10.0.1.0 als auch eine lokale Internet-Protokoll-Adresse ipal2=192.0.2.0 zugeordnet. Durch die Zuordnung der beiden Internet-Protokoll-Adressen ipag2, ipal2 ist die LAN-Schnittstelle AEL2 sowohl im ersten lokalen Netz bzw. Kommunikationsnetz LAN1, KN als auch im kommunikationssystem-internen Netz LAN2 eindeutig identifiziert und ist somit aus jedem der genannten Netze LAN1, LAN2, KN heraus als Ziel adressierbar.

Das in FIG 2 dargestellte zweite Kommunikationssystem KS2 mit der darin angeordneten Netzkopplungseinheit WAML2 und mit den daran angeschlossenen lokalen Netzen LAN3, LAN4, bzw. dem öffentlichen Kommunikationsnetz KN weist den gleichen strukturellen Aufbau wie das beschriebene, erste Kommunikationssystem KS1 auf. Der in der Netzkopplungseinheit WAML2 angeordneten dritten LAN-Schnittstelle AEL3 ist die Internet-Protokoll-Adresse ipag3=140.7.27.0 und dem mit der dritten LAN-Schnittstelle AEL3 verbundenen lokalen Netz LAN3 die Internet-Protokoll-Adresse ipag=140.7.27 zugeordnet. Die im dritten lokalen Netz LAN3 angeordneten Kommunikationsendgeräte KE3, KE4 weisen entsprechend die Internet-Protokoll-Adressen ipag=140.7.27.1 und ipag=140.7.27.2 auf. Desweiteren ist der in der Netzkopplungseinheit WAML2 angeordneten vierten LAN-Schnittstelle AEL4 zum einen die Internet-Protokoll-Adresse ipag4=10.0.2.0 und zum anderen die lokale Internet-Protokoll-Adresse ipal4=192.0.2.0 zugeordnet. Im Ausführungsbeispiel ist, wie beim ersten Kommunikationssystem KS1 erläutert, der in dem kommunikationssystem-internen lokalen Netz LAN4 angeordneten Administrationseinheit ADP2 dieselbe lokale Internet-Protokoll-Adresse ipa1=192.0.2.3 zugeordnet.

Weiterhin ist in FIG 2 ein an das Kommunikationsnetz KN direkt angeschlossenes externes Kommunikationsendgerät N dargestellt, welches die Internet-Protokoll-Adresse 172.16.0.8 aufweist.

Im folgenden ist beispielhaft die protokollgerechte Verwendung sowie die Konvertierung der Routing-Informationen von zwischen den mit dem Kommunikationssytemen KS1, KS2 verbundenen lokalen Netzen LAN1...LAN4 auszutauschenden Datenpaketen DP näher erläutert:

Bei innerhalb eines lokalen Netzes LAN1...LAN4 auszutauschenden Datenpaketen DP werden die Datenpakete DP ohne Beteiligung der entsprechenden Netzkopplungseinheit WAML1, WAML2 direkt vermittelt - beispielhaft durch eine erste punktierte Linie 1 angedeutet. So weisen z.B. von dem ersten Kommunikationsendgerät KE1 an das zweite Kommunikationsendgerät KE2 innerhalb des lokalen Netzes LAN1 zu vermittelnde Datenpakete DP die Internet-Protokoll-Adresse ipag1=139.1.20.1 als Ursprungs-Adresse und die Internet-Protokoll-Adresse ipag2=139.1.20.2 als Ziel-Adressierung in den Routing-Informationen auf.

Bei von dem ersten Kommunikationsendgerät KE1 an die Administrationseinheit ADP1 des ersten Kommunikationssystems KS1 zu vermittelnden Datenpaketen DP - durch eine zweite punktierte Linie 2 angedeutet -, weisen diese die globale Internet-Protokoll-Adresse ipag=193.1.20.1 als Ursprungs-Adresse und die globale Internet-Protokoll-Adresse ipag=10.0.1.3 als Ziel-Adressierung auf. Durch die in der Netzkopplungseinheit WAML1 angeordneten Routing- und Konvertierungs-Mittel wird die das kommunikationssystem-interne lokale Netz LAN2 repräsentierende Internet-Protokoll-Adresse ipag=10.0.1.3 in die entsprechende lokale Internet-Protokoll-Adresse ipa1=192.0.2.3 konvertiert, sowie die eine Fehlerkorrektur ermöglichenden und ebenfalls in den Datenpaketen DP enthaltenen Fehlerkorrektur-Informationen neu berechnet und in das Datenpaket DP entsprechend eingefügt. Durch die Konvertierung der Internet-Protokoll-Adresse in die lokale Internet-Protokoll-Adresse können die Datenpakete DP innerhalb des entkoppelten, kommunikationssystem-internen lokalen Netzes LAN2 vermittelt und an die durch die Ziel-Adressierung identifizierte Administrationseinheit ADP1 übermittelt werden.

Datenpakete DP, die von dem mit dem ersten Kommunikationssystem KS1 verbundenen ersten Kommunikationsendgerät KE1 an die im zweiten Kommunikationssystem KS2 angeordnete zweite Administrationseinheit ADP2 zu vermitteln sind - durch eine dritte punktierte Linie 3 angedeutet, weisen die Internet-Protokoll-Adresse ipag=139.1.20.1 als Ursprungs-Adresse und die Internet-Protokoll-Adresse ipag=10.0.2.3 als Ziel-Adressierung auf. Von dieser wird anschließend in der ersten Netzkopplungseinheit WAML1 mit Hilfe der Bewertungsroutine BW-R die entsprechende Rufnummer rn1...k der im zweiten Kommunikationssystem KS2 angeordneten Netzkopplungseinheit WAML2 abgeleitet. Durch die in der ersten Netzkopplungseinheit WAML1 realisierten Vermittlungsroutine VM-R wird eine entsprechende ISDN-orientierte Verbindung bzw. B-Kanal-Verbindung zu der anhand der Rufnummer adressierten, im zweiten Kommunikationssystem KS2 angeordneten zweiten Netzkopplungseinheit WAML2 aufgebaut und die Datenpakete DP von der ersten Netzkopplungseinheit WAML1 über das Kommunikationsnetz KN an die zweite Netzkopplungseinheit WAML2 übermittelt. Durch die in der zweiten Netzkopplungseinheit WAML2 angeordneten Konvertierungsroutine KV-R wird die ein kommunikationssystem-internes lokales Netz LAN4 repräsentierende globale Internet-Protokoll-Adresse ipag4=10.0.2.3 in die entsprechende lokale Internet-Protokoll-Adresse ipa1=192.0.2.3 konvertiert und eine Fehlerkorrektur-Informationen berechnet.

Bei von dem ersten Kommunikationsendgerät KE1 an das mit dem zweiten Kommunikationssystem KS2 verbundene, dritte Kommunikationsendgerät KE3 zu vermittelnden Datenpaketen DP - durch eine vierte punktierte Linie 4 angedeutet - weisen diese die Internet-Protokoll-Adresse ipag=139.1.20.1 als Ursprungs-Adressierung und die Internet-Protokoll-Adresse ipag=140.7.27.1 als Ziel-Adressierung auf. Von der Ziel-Adressierung wird anschließend mit Hilfe der in der ersten Netzkopplungseinheit WAML1 angeordneten Bewertungs- und Vermittlungs-Routinen KNK-R, VM-R die entsprechende Rufnummer der im zweiten Kommunikationssystem KS2 angeordneten Netzkopplungseinheit WAML2 abgeleitet und eine entsprechende, ISDN-orientierte B-Kanal-Verbindung zu der anhand der Rufnummer adressierten Netzkopplungseinheit WAML2 aufgebaut und anschließend die Datenpakete DP von der ersten Netzkopplungseinheit WAML1 an die zweite Netzkopplungseinheit WAML2 übermittelt. Durch die in der zweiten Netzkopplungseinheit WAML2 angeordneten Bewertungs- und Vermittlungs-Routinen BW-R, VM-R werden die übermittelten Datenpakete DP gemäß der Ziel-Adressierung ipag=140.7.27.1 an das dritte lokale Netz LAN3 bzw. an das dritte Kommunikationsendgerät KE3 vermittelt.

Bei von dem direkt an das Kommunikationsnetz KN angeschlossenen, externen Kommunikationsendgerät N an das mit dem zweiten Kommunikationssystem KS2 verbundene vierte Kommunikationsendgerät KE4 zu vermittelnden Datenpaketen DP - durch eine fünfte punktierte Linie 5 angedeutet - wird zuerst eine entsprechende ISDN-orientierte B-Kanal-Verbindung zwischen dem externen Kommunikationsendgerät N und der im zweiten Kommunikationssystem KS2 angeordneten Netzkopplungseinheit WAML2 aufgebaut. Anschließend werden die Datenpakete DP vom externen Kommunikationsendgerät N an die Netzkopplungseinheit WAML2 übermittelt. Die Datenpakete DP weisen die Internet-Protokoll-Adresse ipag=172.16.0.8 als Ursprungs-Adressierung und die Internet-Protokoll-Adresse ipag=140.7.27.2 als Ziel-Adressierung auf. Durch die in der zweiten Netzkopplungseinheit angeordneten Bewertungs- und Vermittlungs-Routinen BW-R, VM-R werden die übermittelten Datenpakete DP gemäß der Ziel-Adressierung ipag=140.7.27.2 an das dritte lokale Netz LAN3 bzw. an das vierte Kommunikationsendgerät KE4 vermittelt.

## Patentansprüche

1. Kommunikationssystem (KS) zum Vermitteln von Datenpaketen (DP) mit zugeordneten Routing-Informationen zwischen mit dem Kommunikationssystem (KS) verbundenen Kommunikationsendgeräten (KE),
**dadurch gekennzeichnet,**
- **daß** das Kommunikationssystem (KS)
-- ein mehrere bidirektionale, nach einem Zeitmultiplex-Übertragungsverfahren wirkende Anschlüsse (KA1...k) aufweisendes Koppelfeldmodul (KP), und
-- eine mit dem Koppelfeldmodul (KP) verbundene, zumindest einen Signalisierungsanschluß (SS1...k) aufweisende Steuereinheit (STE), und
-- zumindest eine als Teilnehmeranschlußeinheit ausgestaltete Netzkopplungseinheit (WAML)
aufweist,
- daß in der zumindest einen Netzkopplungseinheit (WAML)
-- zumindet eine LAN-Anschlußeinheit (AEL1) mit einer LAN-Schnittstelle (SL1) zum Anschluß an ein erstes lokales Netz (LAN1),
-- zumindest eine einen bidirektionalen, nach einem Zeitmultiplex-Übertragungsverfahren wirkenden Ausgang (HWY) realisierende Multiplexeinheit (MUX) zum Anschluß an zumindest einen der bidirektionalen, nach einem Zeitmultiplex-Übertragungsverfahren wirkenden Anschlüsse (KA1...k) des Koppelfeldmoduls (KP),
-- eine einen Signalisierungs-Ausgang (HDLC) realisierende Signalisierungseinheit (SI) zum Anschluß an den zumindest einen Signalisierungsanschluß (SS1) der Steuereinheit (STE), und
-- eine mit der Multiplexeinheit (MUX) und der Signalisierungseinheit (SI) und der LAN-Anschlußeinheit (AEL1) verbundene Umwandlungseinheit (UE)
--- mit Mitteln (BW-R) zum Bewerten der Routing-Information, und
--- mit Mitteln (VM-R) zum Vermitteln der Datenpakete (DP) von und zum erzten lokalen Netz (LAN1) bzw. von und zum Koppelfeldmodul in Abhängigkeit vom Bewertungsergebnis, und
--- mit Mitteln (KV-R) zum Konvertieren von Signalisierungsinformationen (si) gemäß einem ersten Übertragungsprotokoll in Signalisierungsinformationen (si) gemäß zumindest einem weiteren Übertragungsprotokoll, und
--- mit Mitteln (KV-R) zur Anpassung des Datenformats der zu vermittelnden Datenpakete (DP) gemäß dem ersten oder dem zumindest einem weiteren Übertragungsprotokoll,
angeordnet sind.

2. Kommunikationssystem nach Anspruch 1,
**dadurch gekennzeichnet,**
- **daß** die Netzkopplungseinheit (WAML) zumindest eine weitere mit der Umwandlungseinheit (UE) verbundene LAN-Anschlußeinheit (AEL2) mit einer weiteren LAN-Schnittstelle (SL2) zum Anschluß an zumindest ein weiteres lokales Netz (LAN2) aufweist, und
- **daß** in der Umwandlungseinheit (UE)
-- weitere Mittel zum Vermitteln der Datenpakete (DP) von und zu und zwischen den lokalen Netzen (LAN1, LAN2) bzw. von und zum Koppelfeldmodul (KP) und
-- weitere Mittel zum Konvertieren von und in Signalisierungsinformationen (si) gemäß einem zusätzlichen Übertragungsprotokoll oder Routinginformationen und
-- weitere Mittel zur Anpassung des Datenformats der Datenpakete (DP)
angeordnet sind.

3. Kommunikationssystem nach Anspruch 1 oder 2,
**dadurch gekennzeichnet,**
**daß** bei untereinander verbundenen, ein Kommunikationsnetz (KN) bildenden, weiteren Kommunikationssystemen und bei mit dem Kommunikationsnetz (KN) verbundenen externen Kommunikationsendgeräten (N) die Umwandlungseinheit (UE) weitere Mittel
- zum Vermitteln der Datenpakete (DP)
-- zwischen Kommunikationsendgeräten (KE) des Kommunikationssystems (KS) und einem der angeschlossenen lokalen Netze (LAN1, LAN2) oder
-- zwischen den weiteren Kommunikationssystemen des Kommunikationsnetzes (KN) und einem der angeschlossenen lokalen Netze (LAN1, LAN2) oder
-- zwischen den mit dem Kommunikationsnetz (KN) verbundenen externen Kommunikationsendgeräten (N) und einem der angeschlossenen lokalen Netze (LAN1, LAN2)
und
- zur entsprechenden Konvertierung der Signalisierungsinformationen (si) und
- zur entsprechenden Anpassung des Datenformats der Datenpakete (DP)
aufweist.

4. Kommunikationssystem nach einem der vorherigen Ansprüche,
**dadurch gekennzeichnet,**
**daß** die Netzkopplungseinheit (WAML)
- Mittel zur eindeutigen LAN-Identifizierung (mac1,2) einer LAN-Schnittstelle (SL1, SL2) innerhalb eines lokalen Netzes (LAN1, LAN2) und
- Mittel zur eindeutigen logischen Netz-Identifizierung (ipag1,2) der LAN-Schnittstellen (SL1, SL2) und von Kommunikationsendgeräten der lokalen Netze (LAN1, LAN2), wobei die LAN-Schnittstellen (SL1, SL2) und die Kommunikationsendgeräte einem übergeordneten Netz zugeordnet sind, und
- Mittel zur Kommunikationsnetz-Identifizierung (rnw) der Netzkopplungseinheit (WAML) innerhalb des Kommunikationsnetzes (KN)
aufweist.

5. Kommunikationssystem nach Anspruch 4,
**dadurch gekennzeichnet,**
**daß** die Netzkopplungseinheit (WAML) Mittel zur zusätzlichen, lokalen, logischen Netz-Identifizierung (ipal2) einer LAN-Schnittstelle (SL1, SL2) einschließlich des zugeordneten, lokalen Netzes (LAN1, LAN2) aufweist.

6. Kommunikationssystem nach Anspruch 4 oder 5,
**dadurch gekennzeichnet,**
- **daß** in einem in der Netzkopplungseinheit (WAML) angeordneten, nichtflüchtigen Speicher (PROM1, PROM2) die eindeutige LAN-Identifizierung (macl,2) einer LAN-Schnittstelle (SL1, SL2) und
- **daß** jeweils in einem Speicherbereich (SP1, SP2) eines in der Netzkopplungseinheit (WAML) angeordneten flüchtigen Speichers (SPF) die logische Netz-Identifizierung (ipag1,2) einer LAN-Schnittstelle (SL1, SL2) und
- **daß** jeweils in einem Speicherbereich (SPO2) des flüchtigen Speichers (SPF) die zusätzliche, lokale, logische Netz-Identifizierung (ipal2) einer LAN-Schnittstelle (SL2) und
- **daß** in einem Speicherbereich (SP3) des flüchtigen Speichers (SPF) die Kommunikationsnetz-Identifizierung (rnw) der Netzkopplungseinheit (WAML)
abgespeichert ist.

7. Kommunikationssystem nach einem der Ansprüche 4 bis 6,
**dadurch gekennzeichnet,**
- **daß** die eindeutige LAN-Identifizierung (mac1,2) einer LAN-Schnittstelle (SL1, SL2) durch eine schnittstellenbezogene, standardisierte LAN-Adresse und
- **daß** eine logische Netz-Identifizierung (ipag1,2, ipal2) einer LAN-Schnittstelle (SL1, SL2) durch eine standardisierte Internet-Adresse und
- **daß** die Kommunikationsnetz-Identifizierung (rnw) der Netzkopplungseinheit (WAML) durch eine Kommunikationsnetz-Rufnummer
realisiert ist.

8. Kommunikationssystem nach einem der vorherigen Ansprüche,
**dadurch gekennzeichnet,**
**daß** für das Vermitteln von Datenpaketen (DP) in der Netzkopplungseinheit (WAML)
- Mittel zum Erkennen der Datenpaket-Köpfe und
- Mittel zum Selektieren der in den Datenpaket-Köpfen angeordneten Netz-Identifizierung (ipag1,2, ipal2) und
- Mittel zum Bewerten der Netz-Identifizierung (ipagl,2, ipal2)
- Mittel zum Vermitteln der Datenpakete (DP) in Abhängigkeit vom Bewertungsergebnis
-- entweder zu einem an die Netzkopplungseinheit (WAML) angeschlossenen lokalen Netz (LAN1, LAN2) oder
-- an das Kommunikationsnetz (KN)
vorgesehen sind.

9. Kommunikationssystem nach Anspruch 8,
**dadurch gekennzeichnet,**
**daß** für das Vermitteln von Datenpaketen (DP) über das Kommunikationsnetz (KN) zusätzliche
- Mittel (KNK-R) zum Konvertieren der logischen Netz-Identifizierung (ipe1...k) in eine Kommunikationsnetz-Identifizierung (rn1...k) wobei die Kommunikationsnetz-Identifizierung (rn1...k) in Abhängigkeit von der logischen Netz-Identifizierung (ipe1...k) gebildet wird, und
- Mittel zum Verbindungs-Aufbau (KNK-R) über das Kommunikationsnetz (KN) mit der Kommunikationsnetz-Identifzierung (rn1...k) und
- Mittel zum Weiterleiten der Datenpakete (DP) über die aufgebaute Verbindung
vorgesehen sind.

10. Kommunikationssystem nach Anspruch 9,
**dadurch gekennzeichnet,**
**daß** für die Konvertierung
- in der Netzkopplungseinheit (WAML) Speichermittel (SP4) zur Speicherung von weiteren, logischen Netz-Identifizierungen (ipe1...k) weiterer im Kommunikationsnetz (KN) angeordneter, lokaler Netze bzw. weiterer LAN-Schnittstellen und
- in der Netzkopplungseinheit (WAML) Speichermittel (SP5) zur Zuordnung von jeweils eine weitere Netzkopplungseinheit (WAML2) repräsentierenden Kommunikationsnetz-Identifizierungen (rn1...k) zu den gespeicherten, weiteren, logischen Netz-Identifizierungen (ipe1...k) der weiteren lokalen Netze (LAN3, LAN4) und
vorgesehen sind.

11. Kommunikationssystem nach Anspruch 8,
**dadurch gekennzeichnet,**
**daß** für das Vermitteln von Datenpaketen (DP) zu einem an die Netzkopplungseinheit (WAML) angeschlossenen, weiteren lokalen Netz (LAN1, LAN2) bzw. an eine LAN-Schnittstelle (SL1, SL2) zusätzliche
- Mittel (LNK-R) zum Erkennen von speziellen Netz-Identifizierungen (ipag2) und
- Mittel (LNK-R) zum Konvertieren der erkannten Netz-Identifizierungen (ipag2) in zusätzliche, lokale logische Netz-Identifizierungen (ipal2) und
- Mittel (LNK-R) zum Einfügen der zusätzlichen, lokalen logischen Netz-Identifizierungen (ipal2) in die Datenpakete (DP) und
- Mittel (LNK-R) zum Anpassen und Weiterleiten der Datenpakete (DP)
vorgesehen sind.

12. Kommunikationssystem nach Anspruch 11,
**dadurch gekennzeichnet,**
**daß** für das Vermitteln von vom lokalen Netz (LAN2) an die Netzkopplungseinheit (WAML) bzw. an eine LAN-Schnittstelle (SL1, SL2) übermittelten Datenpaketen (DP)
- Mittel (LNK-R) zum Erkennen von lokalen Netz-Identifizierungen (ipal2) und
- Mittel (LNK-R) zum Konvertieren der erkannten lokalen Netz-Identifizierungen (ipal2) in logische Netz-Identifizierungen (ipag2) und
- Mittel (LNK-R) zum Einfügen der logischen Netz-Identifizierungen (ipag2) in die Datenpakete (DP)
vorgesehen sind.

13. Kommunikationssystem nach einem der vorherigen Ansprüche, **dadurch gekennzeichnet,**
**daß** in der Netzkopplungseinheit (WAML) Sicherungs-Mittel (FWALL) zum Überprüfen von an die Netzkopplungseinheit (WAML) übermittelten Routing-Informationen hinsichtlich der Zulässigkeit der Kommunikationsbeziehungen zwischen der durch die Routing-Informationen bestimmten Ursprungs- und Ziel-Identifizierungen angeordnet sind.

14. Kommunikationssystem nach einem der vorherigen Ansprüche, **dadurch gekennzeichnet,**
**daß** das mehrere Kommunikationssysteme verbindende Kommunikationsnetz (KN) ein ISDN-orientiertes Kommunikationsnetz realisiert.

15. Kommunikationssystem nach einem der vorherigen Ansprüche,
**dadurch gekennzeichnet,**
**daß** das erste bzw. die weiteren lokalen Netze (LAN1, LAN2) durch ein Ringnetz, Busnetz oder Sternnetz realisiert ist.

16. Kommunikationssystem nach einem der vorherigen Ansprüche,
**dadurch gekennzeichnet,**
**daß** eine LAN-Schnittstelle (SL1, SL2) gemäß der Spezifikation IEEE 802.3, 802.4 oder 802.5 ausgestaltet ist.

17. Kommunikationssystem nach einem der vorherigen Ansprüche
**dadurch gekennzeichnet,**
**daß** der zumindest eine bidirektionale, nach einem Zeitmultiplex-Übertragungsverfahren wirkende Ausgang (HDLC)) durch eine Kommunikationssystem-interne, ISDN-orientierte Multi-plex-Schnittsielle realisiert ist, wobei die Multiplex-Schnittstelle mehrere Nutzkanäle umfaßt.

18. Kommunikationssystem nach einem der Ansprüche 14 bis 17
**dadurch gekennzeichnet,**
**daß** in der Netzkopplungseinheit (WAML)
- Mittel zur Feststellung der aktuellen Anzahl der innerhalb eines vorgegebenen Zeitintervalls an ein Ziel zu übermittelnden Datenpakete (DP) und
- Mittel zum Ermitteln der aktuellen Anzahl von ISDN-Verbindungen aus der aktuell festgestellten Anzahl von zu übermittelnden Datenpaketen (DP) und
- Mittel zum dynamischen Auf- und Abbau der aktuell ermittelten Anzahl von ISDN-Verbindungen an ein Ziel
vorgesehen sind.

19. Kommunikationssystem nach einem der vorherigen Ansprüche
**dadurch gekennzeichnet,**
**daß** die Netzkopplungseinheit (WAML) Mittel (PROT) zur gesicherten und gemäß zumindest einem Übertragungsprotokoll wirkenden Vermittlung und Übertragung von Datenpaketen (DP) aufweist.

20. Kommunikationssystem nach Anspruch 19,
**dadurch gekennzeichnet,**
**daß** die Mittel (PROT) zur gesicherten Vermittlung und Übertragung von Datenpaketen (DP) derart ausgestaltet sind,
- **daß** die Vermittlung und der Transport der Datenpakete (DP) anhand der Transportprotokolle TCP/IP erfolgt, und
- **daß** der Transport der Datenpaketen über die ISDN-orientierten Nutzkanäle mittels des PPP-Protokolls gesichert wird.

21. Kommunikationssystem nach einem der vorherigen Ansprüche,
**dadurch gekennzeichnet,**
**daß** die Netzkopplungseinheit (WAML) eine eine serielle und/oder parallele Schnittstelle aufweisende Endgeräte-Anschlußeinheit (SB) zum Anschluß eines Bedienendgerätes aufweist.

## Claims

1. Communications system (KS) for transmitting data packets (DP) with associated routing information between communications terminals (KE) which are connected to the communications system (KS),
**characterized**
- **in that** the communications system (KS) has
-- a switching matrix module (KP), which has two or more bidirectional connections (KA1...k) which operate using the time-division multiplexing transmission method, and
-- a control unit (STE) which is connected to the switching matrix module (KP) and has at least one signalling connection (SS1...k), and
-- at least one network switching unit (WAML), which is configured as a subscriber access unit,
- in that the following items are arranged in the at least one network switching unit (WAML)
-- at least one LAN-access unit (AEL1) with an LAN interface (SL1) for connection to a first local area network (LAN1),
-- at least one multiplexing unit (MUX), which provides a bidirectional output (HWY) which operates using a time-division multiplexing transmission method, for connection to at least one of the bidirectional connections (KA1...k) of the switching matrix module (KP) which operate using the time-division multiplexing transmission method,
-- a signalling unit (SI), which provides a signalling output (HDLC), for connection to the at least one signalling connection (SS1) of the control unit (STE), and
-- a conversion unit (UE) which is connected to the multiplexing unit (MUX), to the signalling unit (SI) and to the LAN access unit (AEL1),
--- having means (BW-R) for assessing the routing information, and
--- having means (VM-R) for transmitting data packets (DP) from and to the first local area network (LAN1) and/or from and to the switching matrix module as a function of the assessment result, and
--- having means (KV-R) for converting signalling information (si) in accordance with a first transmission protocol to signalling information (si) in accordance with at least one further transmission protocol, and
--- having means (KV-R) for adaptation of the data format of the data packets (DP) to be transmitted, in accordance with the first or with at least with one further transmission protocol.

2. Communications system according to Claim 1,
**characterized**
- **in that** the network switching unit (WAML) has at least one further LAN access unit (AEL2), which is connected to the conversion unit (UE) and has a further LAN interface (SL2) for connection to at least one further local area network (LAN2), and
- **in that** the following items are arranged in the conversion unit (UE):
-- further means for transmitting the data packets (DP) from and to and between the local area networks (LAN1, LAN2) and/or from and to the switching matrix module (KP), and
-- further means for conversion from and to signalling information (si) in accordance with an additional transmission protocol or routing information, and
-- further means for adaptation of the data format of the data packet (DP).

3. Communications system according to Claim 1 or 2,
**characterized**
**in that**, in the case of further communications systems which are connected to one another and form a communications network (KN), and in the case of external communications terminals (N) which are connected to the communications network (KN), the conversion unit (UE) has further means
- for transmitting the data packets (DP)
-- between communications terminals (KE) in the communications system (KS) and one of the connected local area networks (LAN1, LAN2), or
-- between the further communications systems of the communications network (KN) and one of the connected local area networks (LAN1, LAN2), or
-- between the external communications terminals (N) which are connected to the communications network (KN) and one of the connected local area networks (LAN1, LAN2)
and
- for corresponding conversion of the signalling information (si) and
- for corresponding adaptation of the data format of the data packets (DP).

4. Communications system according to one of the preceding claims,
**characterized**
**in that** the network switching unit (WAML) has
- means for unique LAN identification (mac1,2) of an LAN interface (SL1, SL2) within a local area network (LAN1, LAN2), and
- means for unique logical network identification (ipag1,2) of the LAN interfaces (SL2, SL2) and of communications terminals in the local area networks (LAN1, LAN2), with the LAN interfaces (SL1, SL2) and the communications terminals being associated with a higher-level network, and
- means for communications network identification (rnw) for the network switching unit (WAML) within the communications network (KN).

5. Communications system according to Claim 4,
**characterized**
**in that** the network switching unit (WAML) has means for additional, local, logical network identification (ipal2) of an LAN interface (SL1, SL2), including that of the associated local area network (LAN1, LAN2).

6. Communications system according to Claim 4 or 5,
**characterized**
- **in that** the unique LAN identification (mac1,2) of an LAN interface (SL1, SL2) is stored in a non-volatile memory (PROM1, PROM2) which is arranged in the network switching unit (WAML), and
- **in that** the logical network identification (ipag1,2) of an LAN interface (SL1, SL2) is stored in a respective memory area (SP1, SP2) of a volatile memory (SPF) which is arranged in the network switching unit (WAML), and
- **in that** the additional, local, logical network identification (ipal2) of an LAN interface (SL2) is stored in a respective memory area (SPO2) of the volatile memory (SPF), and
- **in that** the communications identification (rnw) of the network switching unit (WAML) is stored in a memory area (SP3) of the volatile memory (SPF).

7. Communications system according to one of Claims 4 to 6,
**characterized**
- **in that** the unique LAN identification (mac1,2) of an LAN interface (SL1, SL2) is formed by an interface-related, standardized LAN address, and
- **in that** a logical network identification (ipag1,2, ipal2) of an LAN interface (SL1, SL2) is formed by a standardized Internet address, and
- **in that** the communications network identification (rnw) of the network switching unit (WAML) is formed by a communications network call number.

8. Communications system according to one of the preceding claims,
**characterized**
**in that** the following items are provided in the network switching unit (WAML) for transmitting data packets (DP),
- means for identifying the data packet headers and
- means for selecting the network identification (ipag1,2 ipal2) which is arranged in the data packet headers, and
- means for assessing the network identification (ipag1,2 ipal2)
- means for transmitting the data packets (DP) as a function of the assessment result
-- either to a local area network (LAN1, LAN2) which is connected to the network switching unit (WAML), or
-- to the communications network (KN).

9. Communications system according to Claim 8,
**characterized**
**in that** the following items are additionally provided for transmitting data packets (DP) via the communications network (KN),
- means (KNK-R) for converting the logical network identification (ipe1...k) to a communications network identification (rn1...k), with the communications network identification (rn1...k) being formed as a function of the logical network identification (ipe1...k), and
- means for setting up connections (KNK-R) via the communications network (KN) using the communications network identification (rn1...k) and
- means for passing on the data packets (DP) via the connection that has been set up.

10. Communications system according to Claim 9,
**characterized**
**in that** the following items are provided for the conversion process,
- memory means (SP4) in the network switching unit (WAML), for storing further, logical network identifications (ipe1...k) for further local area networks and further LAN interfaces which are arranged in the communications network (KN), and
- memory means (SP5) in the network switching unit (WAML) for associating communications network identifications (rn1...k) which in each case represent one further network switching unit (WAML2), with the stored, further logical network identifications (ipe1...k) of the further local area networks (LAN3, LAN4), and [lacuna].

11. Communications system according to Claim 8,
**characterized**
**in that** the following items are additionally provided for transmitting data packets (DP) to a further local area network (LAN1, LAN2) which is connected to the network switching unit (WAML), or to an LAN interface (SL1, SL2),
- means (LNK-R) for identifying specific network identifications (ipag2) and
- means (LNK-R) for converting the identified network identifications (ipag2) to additional, local logical network identifications (ipal2), and
- means (LNK-R) for inserting the additional, local logical network identifications (ipal2) into the data packets (DP), and
- means (LNK-R) for adapting and passing on the data packets (DP).

12. Communications system according to Claim 11,
**characterized**
**in that** the following items are additionally provided for transmitting data packets (DP) which are transmitted from the local area network (LAN2) to the network switching unit (WANL) or to an LAN interface (SL1, SL2),
- means (LNK-R) for identifying local network identifications (ipal2), and
- means (LNK-R) for converting the identified local network identifications (ipal2) to logical network identifications (ipag2), and
- means (LNK-R) for inserting the logical network identifications (ipag2) in the data packets (DP).

13. Communications system according to one of the preceding claims,
**characterized**
**in that** security means (FWALL) are arranged in the network switching unit (WAML) in order to check routing information, which is transmitted to the network switching unit (WAML), for the permissibility of the communications relationships between the source and the destination identifications as defined by the routing information.

14. Communications system according to one of the preceding claims,
**characterized**
**in that** the communications network (KN) which connects two or more communications systems is in the form of an ISDN-oriented communications network.

15. Communications system according to one of the preceding claims,
**characterized**
**in that** the first or the further local area network or networks (LAN1, LAN2) is or are in the form of a ring network, bus network or star network.

16. Communications system according to one of the preceding claims,
**characterized**
**in that** an LAN interface (SL1, SL2) is designed in accordance with the IEEE specification 802.3, 802.4 or 802.5.

17. Communications system according to one of the preceding claims,
**characterized**
**in that** the at least one bidirectional output (HDLC), which operates using a time-division multiplexing transmission method, is formed by an ISDN-oriented multiplexing interface which is internal to the communications system, with the multiplexing interface having two or more user channels.

18. Communications system according to one of Claims 14 to 17,
**characterized**
**in that** the following items are provided in the network switching unit (WAML)
- means for defining the current number of data packets (DP) which are to be transmitted to a destination within a predetermined time interval, and
- means for determining the current number of ISDN connections from the currently defined number of data packets (DP) to be transmitted, and
- means for dynamically setting up and clearing the currently determined number of ISDN connections to a destination.

19. Communications system according to one of the preceding claims,
**characterized**
**in that** the network switching unit (WAML) has means (PROT) for protected switching and transmission of data packets (DP) which operate in accordance with at least one transmission protocol.

20. Communications system according to Claim 19
**characterized**
**in that** the means (PROT) for protected switching and transmission of data packets (DP) are designed
- such that the data packets (DP), are switched, transmitted and transported using the TCP/IP transport protocols and
- such that the transport of the data packets via the ISDN-oriented user channels is protected by means of the PPP protocol.

21. Communications system according to one of the preceding claims,
**characterized**
**in that** the network switching unit (WAML) has a terminal access unit (SB), which has a serial and/or parallel interface, for connection of an operator terminal.

## Revendications

1. Système de communication (KS), destiné à commuter des paquets de données (DP), y compris des informations correspondantes de routage, entre des terminaux de communication (KE) raccordés au système de communication (KS), **caractérisé par le fait**
- **que** le système de communication (KS) comporte
-- un module de matrice de couplage (KP) comportant plusieurs raccordements (KA1 ... k) bidirectionnels fonctionnant selon un procédé de transmission à multiplex temporel et
-- une unité de commande (STE), reliée au module de matrice de couplage (KP) et comportant au moins un raccordement de signalisation (SS1 ... k), et
-- au moins, une unité de couplage de réseaux (WAML) conçue comme unité de raccordement d'abonnés,
- **que**, dans la, au moins une, unité de couplage de réseaux (WAML), sont disposées
-- au moins, une unité de raccordement de LAN (AEL1) avec une interface de LAN (SL1) destinée au raccordement à un premier réseau local (LAN1),
-- au moins, une unité multiplex, réalisant une sortie (HWY) bidirectionnelle fonctionnant selon un procédé de transmission à multiplex temporel et destinée au raccordement à, au moins, un des raccordements (KA1 ... k), bidirectionnels et fonctionnant selon un procédé de transmission à multiplex temporel, du module de matrice de couplage (KP),
-- une unité de signalisation (SI), réalisant une sortie de signalisation (HDLC) et destinée au raccordement au, au moins un, raccordement de signalisation (SS1) de l'unité de commande (STE), et
-- une unité de conversion (UE) reliée à l'unité multiplex (MUX) et à l'unité de signalisation (SI) et à l'unité de raccordement de LAN (AEL1)
--- avec des moyens (BW-R), destinés à analyser les informations de routage, et
--- avec des moyens (VM-R), destinés à commuter, en fonction du résultat de l'analyse, les paquets de données (DP) venant du premier réseau local (LAN1) et allant vers le premier réseau local (LAN1) et, respectivement, venant du module de matrice de couplage et allant vers le module de matrice de couplage et
--- avec des moyens (KV-R) destinés à convertir des informations de signalisation (si) conformes à un premier protocole de transmission en informations de signalisation (si) conformes à, au moins, un autre protocole de transmission et
--- avec des moyens (KV-R) destinés à adapter le format de données des paquets de données (DP) à commuter en conformité avec le premier et le, au moins un, autre protocole de transmission.

2. Système de communication selon la revendication 1
**caractérisé par le fait**
- **que** l'unité de couplage de réseaux (WAML) comporte, au moins, une autre unité de raccordement de LAN (AEL2), raccordée à l'unité de conversion (UE) et comportant une autre interface de LAN (SL2), destinée au raccordement à, au moins, un autre réseau local (LAN2), et
- **que**, dans l'unité de conversion (UE), sont raccordés
-- d'autres moyens destinés à commuter les paquets de données (DP) venant des et allant vers et entre les réseaux locaux (LAN1, LAN2) et, respectivement, venant du et allant vers le module de matrice de couplage (KP) et
-- d'autres moyens destinés à convertir des informations de signalisation (si) en informations de signalisation (si) conformes à un protocole de transmission supplémentaire ou des informations de routage et
-- d'autres moyens destinés à adapter le format de données des paquets de données (DP).

3. Système de communication selon la revendication 1 ou 2
**caractérisé par le fait**
**que**, dans le cas d'autres systèmes de communication, reliés entre eux et formant un réseau de communication (KN), et dans le cas de terminaux externes de communication (N) reliés au réseau de communication (KN), l'unité de conversion (UE) comporte d'autres moyens destinés
- à commuter les paquets de données (DP)
-- entre les terminaux de communication (KE) du système de communication (KS) et l'un des réseaux locaux (LAN1, LAN2), qui y sont raccordés, ou
-- entre les autres systèmes de communication du réseau de communication (KN) et l'un des réseaux locaux (LAN1, LAN2), qui y sont raccordés, ou
-- entre les terminaux externes de communication (N) reliés au réseau de communication (KN) et l'un des réseaux locaux (LAN1, LAN2), qui sont raccordés,
et
- à la conversion adéquate des informations de signalisation (si) et
- à l'adaptation adéquate du format de données des paquets de données (DP).

4. Système de communication selon l'une des revendications précédentes
**caractérisé par le fait**
**que** l'unité de couplage de réseaux (WAML) comporte
- des moyens destinés à l'identification de LAN univoque (mac1, 2) d'une interface de LAN (SL1, SL2) à l'intérieur d'un réseau local (LAN1, LAN2) et
- des moyens destinés à l'identification logique et univoque de réseau (ipag1, 2) des interfaces de LAN (SL1, SL2) et de terminaux de communication des réseaux locaux (LAN1, LAN2), les interfaces de LAN (SL1, SL2) et les terminaux de communication étant affectés à un réseau de niveau supérieur, et
- des moyens destinés à l'identification (mw) de réseau de communication de l'unité de couplage de réseaux (WAML) à l'intérieur du réseau de communication (KN).

5. Système de communication selon la revendication 4
**caractérisé par le fait**
- **que** l'unité de couplage de réseaux (WAML) comporte des moyens destinés à l'identification de réseau (ipal2) supplémentaire, locale et logique, d'une interface de LAN (SL1, SL2), y compris du réseau local de niveau supérieur (LAN1, LAN2).

6. Système de communication selon la revendication 4 ou 5
**caractérisé par le fait**
- **que**, dans une mémoire non volatile (PROM1, PROM2), disposée dans l'unité de couplage de réseaux (WAML), est mémorisée l'identification de LAN univoque (mac1, 2) d'une interface de LAN (SL1, SL2) et
- **que**, dans une zone individuelle de mémoire (SP1, SP2) d'une mémoire volatile (SPF) disposée dans l'unité de couplage de réseaux (WAML), est mémorisée chaque identification logique de réseau (ipag1, 2) d'une interface de LAN (SL1, SL2) et
- **que**, dans une zone individuelle de mémoire (SPO2) de la mémoire volatile (SPF), est mémorisée chaque identification de réseau (ipal2), supplémentaire, locale et logique, d'une interface de LAN (SL2) et
- **que**, dans une zone de mémoire (SP3) de la mémoire volatile (SPF), est mémorisée l'identification de réseau de communication (mw) de l'unité de couplage de réseaux (WAML).

7. Système de communication selon l'une des revendications 4 à 6
**caractérisé par le fait**
- **que** l'identification univoque de LAN (mac1, 2) d'une interface de LAN (SL1, SL2) est réalisée par une adresse de LAN standardisée et relative à l'interface et
- **qu'**une identification logique de réseau (ipag1, 2, ipal1, 2) d'une interface de LAN (SL1, SL2) est réalisée par une adresse Internet standardisée et
- **que** l'identification de réseau de communication (rnw) de l'unité de couplage de réseaux (WAML) est réalisée par un numéro d'appel du réseau de communication.

8. Système de communication selon l'une des revendications précédentes
**caractérisé par le fait**
**qu'**il est prévu, pour la commutation de paquets de données (DP), dans l'unité de couplage de réseaux (WAML),
- des moyens destinés à reconnaître les en-têtes de paquets de données et
- des moyens destinés à détecter l'identification de réseau (ipag1, 2, ipal2) disposée dans les en-têtes de paquets de données et
- des moyens destinés à analyser l'identification de réseau (ipag1, 2, ipal2) et
- des moyens destinés à commuter, en fonction du résultat de l'analyse, les paquets de données (DP)
-- ou bien vers un réseau local (LAN1, LAN2) raccordé à l'unité de couplage de réseaux (WAML)
-- ou bien vers le réseau de communication (KN).

9. Système de communication selon la revendication 8
**caractérisé par le fait**
**qu'**il est prévu, pour la commutation de paquets de données (DP) à travers le réseau de communication (KN),
- des moyens supplémentaires (KNK-R) destinés à convertir l'identification logique de réseau (ipe1...k) en une identification de réseau de communication (rn1...k), l'identification de réseau de communication (rn1...k) étant formée en fonction de l'identification logique de réseau (ipe1...k), et
- des moyens supplémentaires (KNK-R) destinés à l'établissement de la liaison à travers le réseau de communication (KN) avec l'identification de réseau de communication (rn1...k) et
- des moyens destinés à retransmettre les paquets de données (DP) par l'intermédiaire de la liaison établie.

10. Système de communication selon la revendication 9
**caractérisé par le fait**
**qu'**il est prévu, pour la conversion,
- dans l'unité de couplage de réseaux (WAML), des moyens de mémorisation (SP4) destinés à mémoriser d'autres identifications logiques de réseau (ipe1...k) d'autres réseaux locaux disposés dans le réseau de communication (KN) et/ou d'autres interfaces de LAN et,
- dans l'unité de couplage de réseaux (WAML), des moyens de mémorisation (SP5) pour la correspondance entre des identifications de réseau de communication (rn1...k) représentant chacune une autre unité de couplage de réseaux (WAML2) et les autres identifications logiques de réseau (ipe1...k) mémorisées des autres réseaux locaux (LAN3, LAN4).

11. Système de communication selon la revendication 8
**caractérisé par le fait**
**qu'**il est prévu, pour la commutation de paquets de données (DP) vers un autre réseau local (LAN1, LAN2) raccordé à l'unité de couplage de réseaux (WAML) ou, respectivement, à une interface de LAN (SL1, SL2),
- des moyens (LNK-R), destinés à reconnaître des identifications particulières de réseau (ipag2), et
- des moyens (LNK-R), destinés à convertir les identifications de réseau reconnues (ipag2) en identifications supplémentaires, locales et logiques, de réseau (ipal2) et
- des moyens (LNK-R), destinés à insérer les identifications locales supplémentaires de réseau (ipal2) dans les paquets de données (DP), et
- des moyens (LNK-R), destinés à adapter et à retransmettre les paquets de données (DP).

12. Système de communication selon la revendication 11
**caractérisé par le fait**
**qu'**il est prévu, pour la commutation de paquets de données (DP) transmis du réseau local (LAN2) à l'unité de couplage de réseaux (WAML) ou, respectivement, à une interface de LAN (SL1, SL2),
- des moyens (LNK-R), destinés à reconnaître des identifications locales de réseau (ipal2), et
- des moyens (LNK-R), destinés à convertir les identifications locales de réseau reconnues (ipal2) en identifications logiques de réseau (ipag2), et
- des moyens (LNK-R), destinés à insérer les identifications logiques de réseau (ipag2) dans les paquets de données (DP).

13. Système de communication selon l'une des revendications précédentes
**caractérisé par le fait**
**que** des moyens de protection (FWALL) sont disposés dans l'unité de couplage de réseaux (WAML), destinés à vérifier des informations de routage, transmises à l'unité de couplage de réseaux (WAML), en ce qui concerne la validité de relations de communication entre les identifications d'origine et les identifications de destination définies par les informations de routage.

14. Système de communication selon l'une des revendications précédentes
**caractérisé par le fait**
**que** le réseau de communication (KN), qui relie plusieurs systèmes de communication, réalise un réseau de communication orienté RNIS.

15. Système de communication selon l'une des revendications précédentes
**caractérisé par le fait**
**que** le premier et, respectivement, les autres réseaux locaux (LAN1, LAN2) sont réalisés par un réseau en anneau, un réseau à bus ou un réseau en étoile.

16. Système de communication selon l'une des revendications précédentes
**caractérisé par le fait**
**qu'**une interface de LAN (SL1, SL2) est conçue conformément à la spécification IEEE 802.3, 802.4 ou 802.5.

17. Système de communication selon l'une des revendications précédentes
**caractérisé par le fait**
**que** la, au moins une, sortie bidirectionnelle (HDLC), fonctionnant conformément à un procédé de transmission à multiplex temporel, est réalisée par une interface multiplex, interne au système de communication et orientée RNIS, l'interface multiplex comportant plusieurs canaux utiles.

18. Système de communication selon l'une des revendications 14 à 17
**caractérisé par le fait**
**qu'**il est prévu, dans l'unité de couplage de réseaux (WAML),
- des moyens destinés à constater le nombre actuel de paquets de données (DP) à transmettre, à l'intérieur d'un intervalle de temps donné, à une destination et
- des moyens destinés à déterminer le nombre actuel de liaisons RNIS à partir du nombre constaté actuellement de paquets de données (DP) à transmettre et
- des moyens destinés à augmenter et diminuer dynamiquement le nombre actuel déterminé actuellement de liaisons RNIS vers une destination.

19. Système de communication selon l'une des revendications précédentes
**caractérisé par le fait**
**que** l'unité de couplage de réseaux (WAML) comporte des moyens (PROT) destinés à commuter et à transmettre, d'une façon protégée, des paquets de données (DP) fonctionnant au moins selon un protocole de transmission.

20. Système de communication selon la revendication 19
**caractérisé par le fait**
**que** les moyens (PROT) destinés à commuter et transmettre des paquets de données (DP) d'une façon protégée sont conçus de telle manière que
- la commutation et le transport des paquets de données (DP) a lieu à l'aide de protocoles de transport TCP/IP et
- le transport des paquets de données par l'intermédiaire des canaux utiles orientés RNIS est protégé au moyen du protocole PPP.

21. Système de communication selon l'une des revendications précédentes
**caractérisé par le fait**
**que** l'unité de couplage de réseaux (WAML) comporte une unité (SB) de raccordement de terminaux, destinée au raccordement d'un terminal de commande et comportant une interface sérielle et/ou parallèle.
